(19) Europäisches Patentamt
European Patent Office
Office européen des brevets

(11) **EP 3 423 809 B1**

(12) **FASCICULE DE BREVET EUROPEEN**

(45) Date de publication et mention de la délivrance du brevet:
**20.09.2023 Bulletin 2023/38**

(21) Numéro de dépôt: **17713708.0**

(22) Date de dépôt: **03.03.2017**

(51) Classification Internationale des Brevets (IPC):
**G01N 11/04** *(2006.01)*

(52) Classification Coopérative des Brevets (CPC):
**G01N 11/04**

(86) Numéro de dépôt international:
**PCT/FR2017/000039**

(87) Numéro de publication internationale:
**WO 2017/149212 (08.09.2017 Gazette 2017/36)**

(54) **DISPOSITIF ET PROCEDE POUR MESURER LA VISCOSITE D'UN FLUIDE EN FONCTION DE SON TAUX DE CISAILLEMENT ET DE SA TEMPERATURE**

VORRICHTUNG UND VERFAHREN ZUR MESSUNG DER VISKOSITÄT EINES FLUIDS IN ABHÄNGIGKEIT VON SEINER SCHERGESCHWINDIGKEIT UND SEINER TEMPERATUR

DISPOSITIF ET PROCÉDÉ POUR MESURER LA VISCOSITÉ D'UN FLUIDE EN FONCTION DE SON TAUX DE CISAILLEMENT ET DE SA TEMPÉRATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2016 FR 1651848**
**25.03.2016 FR 1652601**

(43) Date de publication de la demande:
**09.01.2019 Bulletin 2019/02**

(73) Titulaire: **Formulaction SAS**
**31200 Toulouse (FR)**

(72) Inventeur: **ABGRALL, Patrick**
**31500 Toulouse (FR)**

(74) Mandataire: **BARRE LAFORGUE**
**35, rue Lancefoc**
**31000 Toulouse (FR)**

(56) Documents cités:
• **DEEPAK E. SOLOMON ET AL: "Multiplexed microfluidic viscometer for high-throughput complex fluid rheology", MICROFLUIDICS AND NANOFLUIDICS, vol. 16, no. 4, 1 avril 2014 (2014-04-01), pages 677-690, XP055374636, DE ISSN: 1613-4982, DOI: 10.1007/s10404-013-1261-2**
• **NAM-TRUNG NGUYEN ET AL: "Microfluidic rheometer based on hydrodynamic focusing; Microfluidic rheometer", MEASUREMENT SCIENCE AND TECHNOLOGY, IOP, BRISTOL, GB, vol. 19, no. 8, 1 août 2008 (2008-08-01), page 85405, XP020144351, ISSN: 0957-0233, DOI: 10.1088/0957-0233/19/8/085405**

EP 3 423 809 B1

**Description**

## DOMAINE TECHNIQUE

La présente invention relève des dispositifs et procédés de mesure. Elle s'inscrit dans le domaine des dispositifs et procédés de détermination de caractéristiques rhéologiques d'un fluide, notamment la mesure de sa viscosité en fonction de son taux de cisaillement et de sa température.

## ÉTAT DE LA TECHNIQUE

Que ce soit dans le domaine industriel, alimentaire ou autre, la viscosité est un paramètre très important à connaître pour l'utilisation ou la mise en oeuvre de fluides.

La viscosité d'une substance peut être définie comme une mesure de sa résistance au mouvement sous l'application d'une force (gravité, frottement, étalement, pompage...).

Alors qu'un liquide simple comme de l'eau présente un comportement newtonien, c'est-à-dire que sa viscosité ne varie pas avec le taux de cisaillement, la plupart des formulations liquides d'usage courant sont des fluides complexes (émulsions, dispersions colloïdales, mousses) présentant un comportement non-newtonien, c'est-à-dire que leur viscosité varie avec le taux de cisaillement appliqué.

La connaissance de cette caractéristique est nécessaire à l'ingénieur formulateur lors de la mise au point d'un produit.

Par exemple, un shampooing doit répondre à un cahier des charges précis : non seulement il doit être lavant, présenter un parfum agréable, démontrer une bonne stabilité dans le temps, mais aussi suivre un comportement-rhéologique lié à son usage par le consommateur: forte viscosité à faible cisaillement, de manière à rester dans la main, faible viscosité à un cisaillement plus élevé, lors de son application dans les cheveux.

Il existe, de façon classique, plusieurs procédés de détermination de la viscosité en fonction du taux de cisaillement. Un premier procédé utilise un rhéomètre rotationnel. Dans un tel appareil, un échantillon liquide est cisaillé entre une pièce mobile en rotation et une pièce fixe (par-exemple deux disques plans, un disque conique et un disque plan ou encore deux cylindres concentriques). La viscosité est alors déduite de la relation entre couple et vitesse de rotation de la partie mobile. Soit la vitesse de rotation est imposée et on mesure le couple (cas le plus fréquent), soit l'inverse.

Cette méthode, la plus répandue, s'applique à une large gamme de taux de cisaillement et de viscosités. Par contre, elle nécessite un grand volume d'échantillon à étudier. Elle génère des instabilités hydrodynamiques, spécifiques à l'écoulement rotationnel, qui limitent le taux de cisaillement aux environs de 1000 s-1. Cette limite est d'autant plus basse que la viscosité de l'échantillon est faible, limitant la mesure pour des applications à taux de cisaillement élevé telles que les sprays en général, la pulvérisation de peintures, l'éjection d'encres ou encore l'injection de médicaments. Cette méthode est par ailleurs d'une précision limitée à faible viscosité et de nombreuses géométries de mobiles, souvent onéreuses, sont nécessaires pour couvrir une large gamme de taux de cisaillement et de viscosités. Enfin, sa géométrie ouverte à l'air la rend sensible à différents phénomènes tels que l'évaporation, par exemple lors de la caractérisation d'un vernis à ongles.

Un autre procédé utilise un rhéomètre capillaire. Le principe de cet appareil est qu'un échantillon liquide est cisaillé lors de son écoulement à débit imposé dans un capillaire de dimension connue. La viscosité est déduite de la relation entre débit et pression, mesurée à l'entrée du capillaire.

Le procédé est bien adapté notamment à la caractérisation de fluides de fortes viscosités à des taux de cisaillement élevés, comme par exemple les polymères fondus utilisés dans les procédés de moulage par injection. Par contre, sa mise en oeuvre est onéreuse, il demande encore un grand volume d'échantillon à étudier, il n'est pas adapté aux faibles viscosités et aux faibles cisaillements.

Dans la littérature brevet, on connaît des documents décrivant d'autres procédés de mesure de viscosité d'un fluide en fonction du taux de cisaillement. Un tel procédé est par exemple décrit dans la demande de brevet FR 2 879 290 (Rhodia 2004). Ce procédé utilise le co-écoulement de deux fluides, dont un fluide de référence, dans un canal d'observation.

Dans ce document, le calcul de la viscosité se fait numériquement via la résolution d'un système de six équations différentielles à six inconnues (équation de continuité pour un fluide incompressible, équations de Navier-Stokes pour les trois dimensions, continuité des vitesses et des forces appliquées à l'interface).

Un autre procédé est décrit dans le document DEEPAK E. SOLOMON ET AL: "Multiplexed microfluidic viscometer for high-throughput complex fluid rheology", MICROFLUIDICS AND NANOFLUIDICS, vol. 16, no. 4, 1 avril 2014 (2014-04-01), pages 677-690, XP055374636, DE ISSN: 1613-4982, DOI: 10.1007/s10404-013-1261-2.

On connaît également des solutions analytiques permettant d'extraire plus simplement et rapidement la viscosité et le taux de cisaillement en fonction des largeurs respectives des filets de fluide en co-écoulement et de leurs débits respectifs. De telles solutions ont été par exemple détaillées dans les documents suivants : P. Guillot, A. Colin, Détermination of the flow curve of complex fluids using the Rabinowitsch-Mooney équation in sensorless microrheometer, Microfluid. Nanofluid. 17, 605-611, 2014, D.E. Solomon, S.A. Vanapalli, Multiplexed microfluidic viscometer for high-throughput complex fluid rheology, Microfluid. Nanofluid. 16, 677-690, 2014.

Ce procédé présente alors plusieurs avantages sur les autres techniques existantes :

- Haute précision sur une large gamme de viscosités, dont les faibles viscosités,
- Large gamme de taux de cisaillement, dont les forts taux de cisaillements,
- Faible consommation,
- Confort de la mesure visuelle,
- Par le principe même, étalonnage en continu contre un fluide de référence,
- Possibilité de répéter les mesures en continu, sans interruption du système,
- Pas d'évaporation.

Mais il présente aussi des inconvénients bloquants pour sa mise en oeuvre:

- Le taux de cisaillement appliqué dépend de la largeur du filet de fluide à étudier, qui n'est pas connu avant de lancer l'expérience, or l'ingénieur formulateur souhaite généralement connaître la viscosité sur une gamme de cisaillement donné, correspondant à l'usage du produit (versement depuis une bouteille, mastication, application d'une crème, remplissage d'une bouteille, injection d'un médicament, spray, etc.). Avec le principe du procédé décrit dans ces documents, on ne connaît pas la gamme de taux de cisaillement avant la mesure, mais seulement la gamme de débits.
- La mesure est plus reproductible si elle est toujours effectuée à la même position et est plus précise pour une interface centrée,
- Le procédé demande beaucoup d'interventions manuelles, notamment un ajustement « à l'aveugle » des débits pour obtenir une interface, ce qui demande à l'utilisateur d'être présent,
- Ces ajustements manuels prennent du temps, pendant lequel les fluides s'écoulent, et sont donc coûteux en volume d'échantillon.

## EXPOSÉ DE L'INVENTION

La présente invention vise à remédier aux inconvénients des moyens proposés par l'art antérieur, notamment à ceux exposés ci-avant, en proposant un procédé qui permette de :

- Choisir a priori le taux de cisaillement ou la plage de taux de cisaillement sur laquelle va se faire la mesure de viscosité,
- Contrôler la largeur du filet de fluide à étudier, ce qui permet de gagner en précision et en reproductibilité,
- Optimiser l'ajustement des débits / réduire le nombre d'étapes par un algorithme qui prédit les débits à appliquer en se basant sur le ou les points précédents, ce qui permet de réduire à la fois le temps de mesure et le volume d'échantillon,
- Effectuer une mesure en fonction du taux de cisaillement et/ou de la température sans la présence / sans intervention de l'utilisateur.

La présente invention vise à cet effet, en premier lieu, un procédé selon la revendication 1.

On comprend que le fluide à étudier et le fluide de référence sont poussés simultanément dans le canal principal d'écoulement à des débits contrôlés. Dans le cas où la détection se fait par des moyens d'observation optiques, tels qu'une caméra vidéo, des images du co-écoulement laminaire résultant sont acquises par l'intermédiaire d'un système optique intégré et la position de l'interface est mesurée. La détection peut aussi se faire de manière électrique, par exemple, mais pas seulement par des électrodes intégrées ou non dans le canal.

La largeur respective de chaque filet de fluide est liée à leurs viscosités respectives et à leurs débits respectifs. En utilisant des algorithmes dédiés, la viscosité du fluide à étudier est calculée automatiquement en fonction du taux de cisaillement et éventuellement de la température.

Dans des mises en oeuvre particulières, dans l'étape de calcul des débits initiaux respectifs, la viscosité choisie pour le fluide à étudier est donnée par une estimation de l'utilisateur, une bonne estimation permettant de converger plus rapidement vers le bon taux de cisaillement.

Dans des mises en oeuvre particulières, dans l'étape de calcul des débits initiaux respectifs, les viscosités respectives des filets de fluides sont considérées égales, ce qui évite à l'utilisateur l'étape d'estimation.

Dans des mises en oeuvre particulières, dans l'étape de calcul des débits initiaux respectifs, les largeurs respectives des filets de fluides sont considérées égales, ce qui correspond à une interface centrée et une meilleure précision de la mesure.

Dans des mises en oeuvre particulières, dans l'étape de calcul des débits initiaux respectifs, à la fois les viscosités respectives des fluides sont égales et les largeurs respectives des filets de fluides sont égales et donc les débits initiaux sont égaux.

Dans des mises en oeuvre particulières, dans l'étape de détermination de la viscosité, la viscosité du fluide à étudier est déterminée en tenant aussi compte de la largeur totale du canal d'écoulement et d'une des deux largeurs de filet de fluide.

On comprend qu'il est suffisant de connaître deux des trois valeurs suivantes : largeur du filet de fluide de référence, largeur du filet de fluide à étudier, largeur totale du canal principal d'écoulement, pour connaître la troisième valeur.

La largeur mesurée de filet de fluide à étudier n'étant égale à la largeur de filet de fluide préalablement choisie qu'à une tolérance près, le taux de cisaillement appliqué au fluide à étudier n'est égal au taux de cisaillement visé qu'à une incertitude près. Dans des mises en oeuvre particulières, il est effectué un réajustement du taux de cisaillement en un taux de cisaillement corrigé en fonction du débit corrigé de fluide à étudier, de la profondeur du canal d'écoulement et de la largeur du filet de fluide à étudier.

Dans des mises en oeuvre particulières, la tolérance est comprise entre 5 et 25%.

Dans des mises en oeuvre particulières, le procédé comporte une étape dans laquelle, s'il n'y a pas d'interface détectable, le débit modifié est ajusté automatiquement autour de sa valeur initiale, de manière itérative, jusqu'à ce qu'au moins une interface soit détectable, et entre chaque itération, on revient au début de l'étape d'évaluation de la possibilité de détecter la présence d'au moins une interface.

Dans des mises en oeuvre particulières, on fixe une plage de taux de cisaillement [$\dot{\gamma}_{min}, \dot{\gamma}_{max}$] sur laquelle on souhaite mesurer la viscosité, ainsi qu'un nombre N de points de mesure sur cette plage correspondant chacun à un taux de cisaillement.

Dans des mises en oeuvre particulières, pour plus de précision, on effectue plusieurs mesures pour un taux de cisaillement donné.

Dans un premier mode de réalisation de l'invention, les étapes de calcul des débits initiaux, de mise en route des moyens d'injection, d'évaluation de la détection de la présence d'au moins une interface, de modification itérative du débit et de détermination de la viscosité sont alors répétées pour chaque taux de cisaillement.

Dans un second mode de réalisation de l'invention, la viscosité du fluide à étudier initialement choisie pour un taux de cisaillement donné est estimée par au moins une des mesures déjà effectuées à d'autres taux de cisaillement. L'estimation peut être effectuée en faisant l'hypothèse que le liquide est newtonien, c'est-à-dire que sa viscosité ne varie pas par rapport à la dernière mesure, ou en ajustant un modèle rhéologique comme une loi de puissance, une loi de Carreau ou tout autre modèle en fonction des taux de cisaillement de la plage pour lesquels des mesures ont été effectuées.

Dans des mises en oeuvre particulières, le positionnement à la largeur de filet de fluide à étudier préalablement choisie est réalisé après plusieurs itérations, en fonction de la tolérance acceptée.

Dans des mises en oeuvre particulières, dans l'étape de modification itérative du débit on fait l'hypothèse que la viscosité $\eta$ varie peu sous l'effet du changement de cisaillement.

Il peut y avoir deux filets du même fluide de référence de part et d'autre du filet de fluide à étudier, s'écoulant au même débit. Cette configuration est appelée ici configuration à trois fluides, alors que la configuration précédente comprenant un seul fluide de référence ou fluide de référence unique est appelée ici configuration à deux fluides. Dans le cas de la configuration à trois fluides, deux interfaces sont formées entre chacun des deux filets de fluide de référence et le filet de fluide à étudier. Le procédé décrit précédemment s'applique en identifiant la configuration à trois fluides à une configuration à deux fluides pour laquelle la somme des deux largeurs de fluide de référence égale à la largeur d'un filet de fluide de référence unique et la somme des deux débits de fluide de référence égale au débit d'un filet de fluide de référence unique.

En alternative ou en combinaison avec le procédé précédemment décrit, il peut être mis en oeuvre un procédé, dans lequel le canal principal d'écoulement présente une largeur ou une hauteur non constante. Dans cette configuration, le procédé sera appliqué dans une zone d'analyse réduite pour laquelle on considère les dimensions du canal localement constantes. Si on considère maintenant plusieurs zones d'analyse associées chacune à différentes dimensions du canal, on comprend qu'il ne sera pas forcément possible d'ajuster le débit de fluide de référence pour obtenir une largeur prédéterminée de filet de fluide à étudier.

Ainsi, l'intégralité du procédé n'est appliquée que dans une seule zone d'analyse. Par contre, la viscosité et le taux de cisaillement peuvent être déterminée dans chaque zone d'analyse pour laquelle l'interface est visible. Cette méthode présente l'avantage de permettre de mesurer rapidement la viscosité pour plusieurs taux de cisaillement sans changement des débits. Par contre elle présentera des biais pour des produits non-newtoniens, la mesure ne se faisant pas pour une largeur de filet de fluide à étudier constante à une faible incertitude près. Enfin des effets élongationels peuvent également biaiser la mesure.

L'invention vise sous un autre aspect un dispositif, selon la revendication 18, pour mesurer la viscosité d'un fluide.

Avantageusement, le dispositif comprend deux canaux d'alimentation de fluide de référence débouchant dans le canal principal d'écoulement en intercalant entre eux le canal d'alimentation de fluide à étudier, au moins une interface étant formée entre chaque filet de fluide de référence et le filet de fluide à étudier.

Avantageusement, pour la mise en oeuvre du procédé avec plusieurs zones d'analyse de largeurs ou de hauteurs différentes sélectionnées, le canal principal d'écoulement présente des variations, une largeur ou une hauteur du canal principal d'écoulement variant dans la longueur du canal principal d'écoulement.

## PRÉSENTATION DES FIGURES

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui illustrent :

Figure 1 : les éléments principaux mis en oeuvre dans le dispositif décrit ici,

Figure 2 : un co-écoulement laminaire de deux fluides à débits contrôlés dans une jonction microfluidique,

Figure 3 : un organigramme des étapes principales du procédé dans un mode de mise en oeuvre particulier,

Figure 4 : un dispositif avec deux filets de fluide de référence encadrant un filet de fluide à étudier, donc un co-écoulement laminaire de trois fluides à débits contrôlés dans une jonction microfluidique,

Figure 5 : un dispositif avec un canal d'alimentation principal avec une largeur variable.

## DESCRIPTION DÉTAILLÉE DE MODES DE RÉALISATION DE L'INVENTION

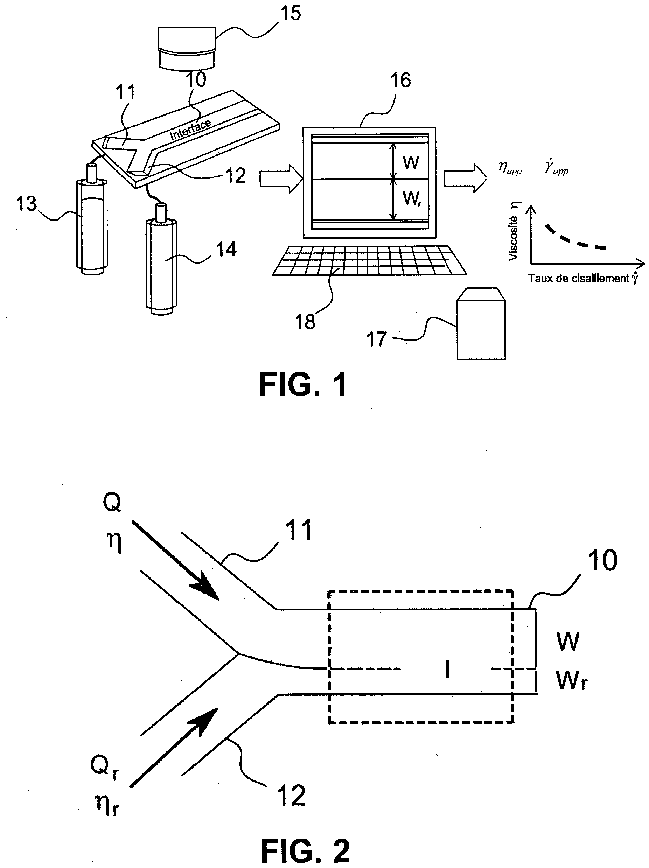

Comme on le voit sur les figures 1 et 2, qui illustrent un mode de réalisation non limitatif de l'invention, le dispositif de mesure de viscosité comprend en premier lieu un canal principal d'écoulement 10, également appelé dans la suite de la description jonction microfluidique 10, laquelle est alimentée par deux canaux d'alimentation 11, 12, l'ensemble étant disposé ici sous forme générale d'un « Y », dont les canaux d'alimentation 11, 12 forment les branches et le canal principal d'écoulement forme le tronc.

On entend par microfluidique le fait que le canal principal d'écoulement présente au moins une dimension dans la gamme allant du micron au millimètre, ce qui assure alors un écoulement laminaire dans ledit canal principal d'écoulement. De préférence, le canal est large et peu profond pour i) une meilleure précision de la mesure et ii) faciliter sa fabrication.

Chaque canal d'alimentation 11, 12 est relié à une seringue 13, 14. Ces seringues 13, 14 sont ici amovibles. Le canal principal d'écoulement 10 débouche en aval dans un bac de récupération (non illustré sur les figures). On définit amont et aval par référence au sens d'écoulement des fluides dans le canal principal d'écoulement 10 et ses canaux d'alimentation 11, 12. On utilise ici un canal en forme de « Y », mais il est clair que d'autres formes sont envisageables, le but étant d'obtenir une zone de co-écoulement entre le fluide à étudier et un fluide de référence.

On comprend que, de la sorte, il est possible d'injecter simultanément des fluides dans les canaux d'alimentation 11, 12 par les deux seringues 13, 14 et, de là, dans la jonction microfluidique 10.

Dans le présent exemple de réalisation, la jonction microfluidique d'écoulement 10 est configurée sous forme d'un tube de section constante, de largeur deux millimètres environ, et de profondeur d'environ cent microns. Il est clair que ces dimensions sont données ici à titre non limitatif. La largeur de la jonction microfluidique 10 et sa profondeur peuvent être comprises entre 1 micron et quelques millimètres.

Chaque canal d'alimentation 11, 12 est ici de section constante, de largeur environ une demi-largeur de la jonction microfluidique 10, et de profondeur sensiblement égale à celle de la jonction microfluidique 10.

L'ensemble formé par les canaux d'alimentation 11, 12 et la jonction microfluidique 10 est dénommé dans la suite de la description cellule microfluidique.

La géométrie de la cellule microfluidique est telle que, dans le présent exemple, les deux canaux d'alimentation 11, 12 sont sensiblement orientés à 45° de part et d'autre de la jonction microfluidique 10.

Dans l'exemple de réalisation décrit ici, la cellule microfluidique est composée de deux plaques minces assemblées l'une contre l'autre, ces plaques comportant sur leur faces en vis-à-vis une gravure déterminant la jonction microfluidique 10 et les canaux d'alimentation 11, 12. La cellule microfluidique est ici réalisée en verre, mais elle peut également être réalisée en tout autre matériau, préférentiellement mais non limitativement chimiquement inerte, et transparent dans les longueurs d'onde utilisées pour l'observation de l'interface entre les deux fluides. On peut notamment réaliser la cellule microfluidique en matière plastique transparente.

L'interface est illustrée par une droite en pointillés référencée I à la figure 2. $Q$ et $\eta$ référencent respectivement le débit et la viscosité du fluide à étudier, $Q_r$ et $\eta_r$ le débit et la viscosité du fluide de référence, $W$ la largeur du filet de fluide à étudier et $W_r$ la largeur du filet de fluide de référence.

Le dispositif comprend par ailleurs une caméra 15 en tant que moyens d'observation, placée en regard de la partie centrale de la jonction microfluidique 10. Dans le présent exemple non limitatif de réalisation, il s'agit d'une caméra vidéo d'une définition typique d'au moins un mégapixel, la caméra faisant office de moyens d'observation.

Il est alors possible d'observer l'interface entre les deux filets fluides lors de leur écoulement dans la jonction microfluidique 10, et ce, à diverses vitesses d'écoulement de l'un ou l'autre fluide. On définit pour la suite de la description la distance interface-bord comme la distance, dans le plan de la cellule microfluidique, entre l'interface entre les fluides et un des bords du canal principal d'écoulement, choisi comme référence à cet effet. Cette distance interface-bord est donc mesurée perpendiculairement au sens d'écoulement dans le canal principal d'écoulement. Elle est calculable à partir des images observées par la caméra 15.

Le dispositif comprend également une interface de visualisation 16 des images issues de la caméra 15. Il s'agit ici de l'écran d'un ordinateur de type PC, ou de tout autre type d'afficheur.

Le dispositif comprend ensuite des moyens de calcul, ici sous la forme d'un microordinateur 17 ou d'un microcalculateur. Le dispositif comprend encore des moyens de commande 18, sous la forme d'un clavier ou d'un écran tactile, ou toute autre interface permettant de contrôler : le fonctionnement des seringues 13, 14, l'éclairage de la zone d'observation du canal principal 10, le fonctionnement de la caméra 15. Les moyens de calcul 17 permettent l'exécution de logiciels réalisant divers calculs sur la base des observations enregistrées par la caméra, et l'affichage de résultats de mesure.

Les moyens de calcul 17 sont éventuellement reliés par un réseau de communication (non illustré ici) à un serveur ou une base de données distante (également non illustrée).

Dans le présent exemple de réalisation, le dispositif comporte également des moyens de contrôle en température (non illustrés ici) des deux fluides avant leur entrée dans la jonction microfluidique 10, et/ou au cours de cet. écoulement. Ces moyens de contrôle de température prennent ici la forme d'un dispositif de type Peltier, connu en soi.

L'ensemble des éléments décrits ci-dessus trouve avantageusement place dans un boîtier. Dans le mode de réalisation décrit ici à titre non limitatif, ce boîtier permet l'accès en face avant aux deux seringues 13, 14, ainsi que l'accès à des canalisations flexibles reliant ces seringues 13, 14 aux canaux d'alimentation 11, 12. Chaque seringue 13, 24 est montée sur un dispositif vertical de mise en mouvement du piston, ces dispositifs étant supposés connus en soi de l'homme du métier. Le boîtier comporte en partie centrale en face avant la cellule microfluidique, ici disposée à l'horizontale, et au-dessus de laquelle est disposée la caméra 15. L'interface de commande est ici disposée en face avant à côté de la caméra, et l'ensemble est relié à un microordinateur 17 qui permet le calcul et l'affichage des résultats.

Dans le mode de réalisation décrit ici, un même ordinateur 17 permet de contrôler et d'effectuer les calculs sur un ensemble de boîtiers de mesure semblables.

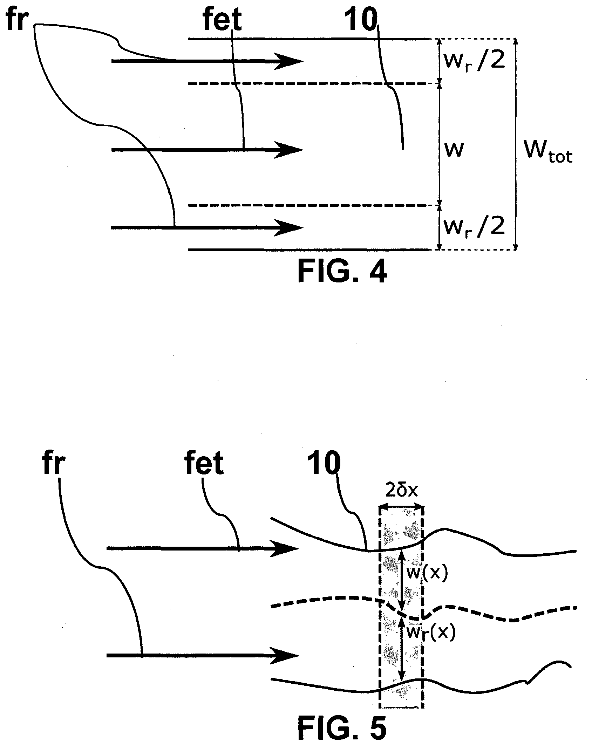

La figure 4 montre un dispositif pour mesurer la viscosité d'un fluide comprenant deux canaux d'alimentation de fluide de référence débouchant dans le canal principal d'écoulement 10 en intercalant entre eux le canal d'alimentation de fluide à étudier.

A la figure 4, fr indique les deux filets de fluide de référence, fet le filet de fluide à étudier, Wr la largeur du filet de fluide de référence, et W la largeur du filet de fluide à étudier, la somme des deux largeurs Wr est égale à la largeur du fluide à étudier et la largeur du canal principal est Wtot.

Dans ce mode de réalisation, une interface, indiquée en pointillés, est formée entre chaque filet de fluide de référence et le filet de fluide à étudier. Dans cet écoulement conjoint des fluides, le filet de fluide à étudier est gainé par deux filets de fluide de référence. Les deux filets de fluide de référence sont de même viscosité $\eta_r$, de même débit $Q_r$ / 2 et en conséquence de même largeur $w_r$ / 2. La mise en oeuvre du procédé avec deux filets de fluide de référence sera ultérieurement détaillée.

La figure 5 montre un dispositif pour mesurer la viscosité d'un fluide avec le canal principal d'écoulement 10 présentant des variations, une largeur ou une hauteur du canal principal d'écoulement variant dans la longueur du canal principal d'écoulement 10.

W(x) et Wr(x) sont respectivement les largeurs du filet de fluide à étudier fet et du filet de fluide de référence fr, variant selon la valeur x de la longueur du canal principal d'écoulement 10.

D'une manière générale, le procédé selon la présente invention se rapporte à un dispositif comprenant :

- un canal principal d'écoulement 10, ce canal principal d'écoulement 10 étant prolongé en amont à une de ses extrémités par deux entrées d'alimentation 11, 12, reliées à des moyens d'injection 13, 14 respectivement d'un fluide de référence et d'un fluide à étudier, la viscosité du fluide de référence étant connue, et
- des moyens d'observation 15 d'une partie d'une interface créée entre un filet de fluide à étudier et le filet de fluide de référence, lesdits deux filets de fluide lors de leur écoulement dans une zone d'observation, chaque filet de fluide présentant une largeur de filet de fluide, la somme de la largeur du filet de fluide de référence et de la largeur de filet de fluide à étudier étant égale à la largeur du canal principal d'écoulement 10, cette largeur étant définie perpendiculairement à l'écoulement.

## MODE DE FONCTIONNEMENT

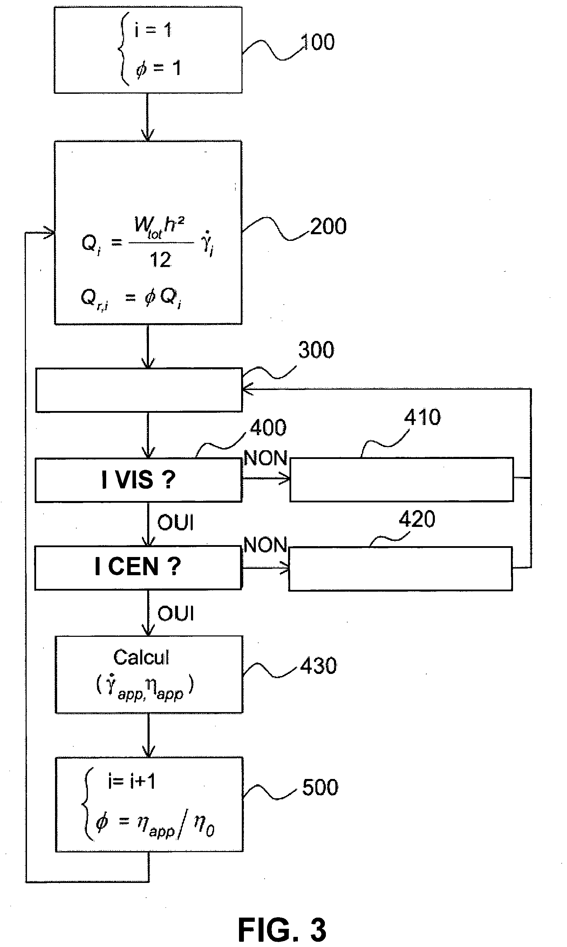

En se référant plus particulièrement à la figure 3, le procédé de mesure de la viscosité du fluide à étudier en fonction du taux de cisaillement qui lui est appliqué comprend les étapes suivantes :

- choix d'une plage de taux de cisaillement sur lequel effectuer les mesures de viscosité,
- calcul 100 des débits initiaux respectifs du filet de fluide de référence et du filet de fluide à étudier pour un taux de cisaillement donné, une viscosité pour le fluide à étudier et une largeur du filet de fluide à étudier étant préalablement choisies pour ce calcul,
- mise en route 200 des moyens d'injection 13, 14 du filet de fluide de référence et du filet de fluide à étudier avec les débits initiaux respectifs,
- après stabilisation de l'écoulement, évaluation 300 de la possibilité de détecter la présence d'au moins une interface entre le filet de fluide à étudier et le filet de fluide de référence dans une zone d'observation du canal principal d'écoulement 10, et détermination de largeur du filet de fluide à étudier et du filet de fluide de référence,
- modification itérative 400 du débit du filet de fluide de référence en tant que débit corrigé jusqu'à ce que l'interface soit détectable et que la largeur mesurée du filet de fluide à étudier soit égale à la largeur totale du filet de fluide préalablement choisie à l'étape de calcul 100 des débits initiaux, en tenant compte d'une tolérance également préalablement choisie,
- détermination de la viscosité 430 du fluide à étudier pour le taux de cisaillement en fonction au moins du débit initial du filet de fluide à étudier et du débit corrigé dudit au moins un fluide de référence, de la viscosité du fluide de référence et des largeurs respectives du filet de fluide à étudier et du filet de fluide de référence.

Dans la suite de la description, qui détaille un mode de mise en oeuvre du procédé de détermination de la viscosité sur une plage de taux de cisaillement, les paramètres utilisés dans les formules de calcul, et liés au fluide à étudier sont présentés sans indice, alors que les paramètres liés à la référence sont affectés d'un indice r.

### Méthode de calcul de la viscosité et du taux de cisaillement

De manière générale, i) la viscosité d'un fluide varie en fonction de son taux de cisaillement et ii) le taux de cisaillement n'est pas constant sur une section transverse du canal. Cela implique que la viscosité n'est pas forcément constante sur une section transverse du canal.

La méthode usuelle consiste à calculer tout d'abord i) une viscosité dite « apparente » $\eta_{app}$ et un taux de cisaillement $\dot{\gamma}_{app}$, également dit « apparent », puis d'appliquer ii) la méthode de Rabinowitsch pour extraire la « vraie » viscosité et le « vrai » taux de cisaillement aux parois (on parle ici des parois inférieures et supérieures du canal, séparées d'une distance h).

Pour extraire les paramètres apparents, on part de l'équation constitutive d'un fluide newtonien appliquée au filet d'échantillon:

$$\eta_{app} = \frac{\sigma_w}{\dot{\gamma}_{app}} \qquad (1)$$

Où $\sigma_w$ est la contrainte de cisaillement à la paroi inférieure ou supérieure, appliqué au filet d'échantillon, dont l'expression pour un canal de section rectangulaire est bien décrite dans des ouvrages de référence (C.W. Macosko, Rheology : principles, measurements and applications, Wiley, 1994) :

$$\sigma_w = -\frac{h}{2(1+h/w)}\nabla P \simeq -\frac{h}{2}\nabla P \quad \text{pour } h << w \qquad (2)$$

Avec $\nabla P$ le gradient de pression dans le filet d'échantillon. De manière générale, l'expression du gradient de pression en fonction du débit pour un écoulement laminaire incompressible dans un canal de section quelconque s'écrit (M.E. Steinke et al., Single-Phase liquid friction factors in microchannels, Int. J. of Therm. Sci., 45, 1073-1083,2006) :

$$\nabla P = -\frac{2\eta_{app}\Pi}{D^2 S}Q = -2\,g\,\eta_{app}\,Q \qquad (3)$$

Où $\Pi$ est le nombre de Poiseuille associé au filet d'échantillon, $D^2$ est le diamètre hydraulique (le rapport entre quatre fois l'aire de la section et le périmètre mouillé) du filet d'échantillon et $S$ est l'aire de la section filet d'échantillon. L'expression du nombre de Poiseuille en fonction de la forme de la section du canal (circulaire, rectangulaire, triangulaire, etc.) est donnée dans de nombreux ouvrages de référence (notamment H. Bruus, Theoretical Microfluidics, Oxford University Press, 2007). Par commodité d'écriture, on introduit un paramètre caractéristique de la géométrie du fluide à étudier g = $\Pi/D^2 S$.

En combinant les équations (1) à (3), on peut faire disparaître du calcul la viscosité apparente $\eta_{app}$, inconnue à priori, et obtenir le taux de cisaillement apparent auquel est soumis l'échantillon :

$$\dot{\gamma}_{app} = h\,g\,Q \qquad (4)$$

Reste à calculer la contrainte de cisaillement pour obtenir la viscosité apparente de l'échantillon à partir de l'équation constitutive (1). Malheureusement cette fois-ci l'application directe des équations (2) et (3) fait intervenir la viscosité apparente $\eta_{app}$ du fluide à étudier, toujours inconnue.

On remarque alors que si l'interface entre les deux fluides est rectiligne et parallèle aux parois, le gradient de pression doit être constant pour les deux fluides sur une section quelconque du canal. Le gradient de pression dans le fluide à étudier peut donc être assimilé à celui dans le fluide de référence, soit $\nabla P = \nabla P_r$, dont la viscosité est connue, et qui peut donc être aisément calculé en appliquant les relations introduites ci-dessus. On peut donc expliciter la contrainte de cisaillement appliquée au filet de fluide à étudier, car on connaît les caractéristiques de l'écoulement du fluide de référence :

$$\sigma_w = h\,g_r\,\eta_r\,Q_r \qquad (5)$$

Où $g_r$ est le paramètre caractéristique de la géométrie du fluide de référence. Finalement, on en déduit la viscosité apparente de l'échantillon :

$$\eta_{app} = \frac{g_r}{g}\frac{Q_r}{Q}\eta_r \qquad (6)$$

Pour un canal large et peu profond ($h \ll w$), on fait souvent les simplifications suivantes : $\Pi$ = 24 et $D = 2h$, soit g = $6/wh^3$ . Le taux de cisaillement apparent et la viscosité apparente s'exprime alors de la manière suivante :

$$\begin{cases} \dot{\gamma}_{app} = hgQ \simeq \dfrac{6Q}{wh^2} \\[2mm] \eta_{app} = \dfrac{g_r}{g}\dfrac{Q_r}{Q}\eta_r \simeq \dfrac{w}{w_r}\dfrac{Q_r}{Q}\eta_r \end{cases} \qquad (7)$$

De manière classique, on peut alors appliquer la correction de Rabinowitsch pour calculer les taux de cisaillement et viscosité à la paroi inférieure ou supérieure (C.W. Macosko, Rheology : principles, measurements and applications, Wiley, 1994) :

$$\begin{cases} \dot{\gamma}_w = \frac{1}{3}\dot{\gamma}_{app}\left(2 + \frac{d\ln\dot{\gamma}_{app}}{d\ln\sigma_w}\right) \\ \eta_w = \frac{\sigma_w}{\dot{\gamma}_w} \end{cases} \qquad (8)$$

On note que le système d'équations (7) lie les dimensions des filets de fluides, leurs débits et leurs viscosités, ainsi que le taux de cisaillement. Il est donc possible de calculer ou d'ajuster les débits de fluide à partir de ce système d'équations, en utilisant les hypothèses décrites plus haut.

Plus précisément, dans un exemple non limitatif de mise en oeuvre de l'invention, le procédé comprend des étapes suivantes (voir figure 2) :

**Etape 100:** L'utilisateur fournit la plage de cisaillement $[\dot{\gamma}_{min}, \dot{\gamma}_{max}]$ sur laquelle il désire mesurer la viscosité et le nombre N de points de mesure. Cette plage est découpée de manière linéaire ou logarithmique en une série de taux de cisaillement $\dot{\gamma}_1, \dot{\gamma}_2, ..., \dot{\gamma}_i, ..., \dot{\gamma}_N$.

**Etape 200 :** L'instrument fait s'écouler les deux fluides au même débit $Q_1 = \frac{W_{tot}h^2}{12}\dot{\gamma}_1$, où $W_{tot}$ est la largeur totale du canal, $\dot{\gamma}_1$ est le premier taux de cisaillement choisi, $Q_1$ est le débit initial de fluide, et h est la hauteur du canal. Ce débit est calculé à partir du premier taux de cisaillement choisi $\dot{\gamma}_1$ en faisant l'hypothèse, dans le présent exemple nullement limitatif, que les deux viscosités sont égales et que l'interface entre les deux fluides est centrée (c'est-à-dire que la largeur du filet de fluide à étudier est ici égale à la moitié de la largeur total du canal principal d'écoulement), ce qui n'est pas toujours le cas, l'interface pouvant se trouver à des distances différentes de chaque paroi longitudinale du canal principal d'écoulement.

**Etape 300 :** Après stabilisation de l'écoulement, l'instrument détermine dans l'ordre i) si oui ou non il y a au moins une interface détectable par les moyens d'observation (optiques ou autres) dans une zone d'observation prédéfinie, et ii) si il y a au moins une interface quelle est sa position.

**Etape 400 :** D'après l'évaluation précédente, l'instrument détermine la situation et agit en conséquence :

410 : S'il n'y a pas d'interface détectable, soit pas d'interface visible référencé I VIS, le débit du fluide de référence est ajusté automatiquement autour de sa valeur initiale, de manière itérative, jusqu'à ce qu'au moins une interface soit détectable. Entre chaque itération, on revient à l'étape 300, dans le présent exemple de réalisation, cet ajustement est réalisé par paliers d'amplitude croissante. Alternativement, il est possible i) d'identifier le liquide remplissant tout le canal (la couleur ou le niveau de gris de la référence vu par la caméra étant connu) avant ii) d'ajuster les débits en conséquence. Ceci correspond à un ajustement grossier.

420 : S'il y a au moins une interface détectable et que la largeur du filet de fluide de référence n'a pas la valeur préalablement choisie (à une tolérance près), c'est-à-dire que l'interface n'est pas centrée I CEN, le débit du fluide de référence est ajusté de manière à obtenir pour la largeur du filet de fluide à étudier la valeur préalablement choisie. Ceci correspond à un ajustement fin. La largeur du filet de fluide à étudier préalablement choisie doit être suffisamment grande pour que l'interface ne soit pas perturbée par la présence dans son environnement de la paroi longitudinale et suffisamment petite pour que l'interface ne soit pas perturbée par la présence dans son environnement de l'autre bord longitudinal du canal principal d'écoulement.

Le positionnement à la largeur de filet de fluide à étudier préalablement choisie peut être réalisé après plusieurs itérations, en fonction de la tolérance acceptée.

Avantageusement, une zone médiane de l'interface peut se trouver à égale distance des parois longitudinales du canal principal d'écoulement, l'interface étant alors centrée et la largeur du filet de fluide à étudier préalablement choisie étant égale à la moitié de la largeur du canal d'écoulement.

Pour cela, plusieurs méthodes sont possibles. Par exemple, la mesure de la largeur du filet de fluide à étudier permet d'extraire la viscosité approximative du fluide à étudier. En se basant sur les modèles précédents, on peut écrire que $\frac{w}{w_r} = \frac{\eta}{\eta_r}\frac{Q}{Q_r}$. On cherche à calculer un nouveau débit $Q'$, dit débit modifié, pour lequel l'interface sera centrée

(soit $w = w_r$), sans affecter le débit du fluide à étudier qui correspond déjà au taux de cisaillement désiré pour une

$$Q'_r = \frac{\eta}{\eta_r} Q$$

interface centrée. Selon l'équation précédente, la nouvelle situation impose alors pour le débit modifié                          .
On fait ainsi l'hypothèse que $\eta$ variera peu sous l'effet du changement de cisaillement lié à la variation de $w$. En pratique, le centrage peut nécessiter plusieurs itérations, selon la tolérance admise. Après ajustement du débit, on revient à l'étape 300).

430 : Si il y a au moins une interface détectable et qu'elle est centrée, l'instrument valide la mesure. Dans le mode de mise en oeuvre non limitatif décrit ici, pour plus de précision, on effectue plusieurs mesures pour chaque taux de cisaillement.

La viscosité du fluide à étudier peut être déterminée en tenant aussi compte de la largeur totale du canal d'écoulement et d'une des deux largeurs des filets de fluides. Il peut être effectué un réajustement du taux de cisaillement en un taux de cisaillement corrigé en fonction du débit corrigé de fluide à étudier, de la profondeur du canal d'écoulement et de la largeur du filet de fluide à étudier.

Etape 500 : On passe au taux de cisaillement suivant $\dot{\gamma}_2$. Le débit du fluide à étudier $Q_2$ correspondant est calculé de la manière précédente, toujours en faisant l'hypothèse que l'interface sera centrée, ce qui s'écrit

$$Q_2 = \frac{W_{tot} h^2}{12} \dot{\gamma}_2$$

, avec les mêmes notations que précédemment.

Par contre, à la différence du premier point, on utilise la viscosité mesurée lors du point précédent pour corriger le débit du fluide de référence (dans les étapes 420, 430). Ainsi, la viscosité du fluide à étudier peut être estimée par au moins une des mesures déjà effectuées, ceci pour gagner du temps de mise en oeuvre du procédé.

A nouveau, on fait ainsi l'hypothèse que la viscosité $\eta$ variera peu sous l'effet du changement de cisaillement.

$$Q_{r,2} = \frac{\eta_1}{\eta_r} Q_2$$

Plus spécifiquement, en appliquant le même raisonnement que précédemment, on aura                          . Après application de ce nouveau couple de débit, le déroulement est le même que pour le premier point (étapes 300 et 400).

Le mécanisme est le même pour les points suivants : le débit du fluide à étudier est calculé à partir du taux de

$$Q_i = \frac{W_{tot} h^2}{12} \dot{\gamma}_i$$

cisaillement voulu                          (mêmes notations que précédemment), et le débit du fluide de référence est calculé

$$Q_{r,i} = \frac{\eta_{i-1}}{\eta_r} Q_i$$

à partir du débit de fluide à étudier corrigé par le rapport de viscosité du point précédent                          .

Alternativement, en se basant sur les généralisations et les notations que l'on vient d'introduire, dans un autre exemple de réalisation:

$$Q_i = \frac{\dot{\gamma}_i}{g_{set} h} \simeq \frac{w_{set} h^2}{6} \dot{\gamma}_i$$

i) On associe à chaque $\dot{\gamma}_i$ un débit du fluide à étudier                          Où $g_{set}$ est le paramètre géométrique associé à un filet de fluide de profondeur $h$ et de la largeur préalablement choisie $w_{set}$, comme défini précédemment.

ii.a) Soit on applique la méthode simple en partant à chaque fois d'un débit du fluide de référence $Q_{r,i} = Q_i$ (on considère alors des viscosités égales, la généralisation à des viscosités non égales peut se déduire du système d'équations (7)),

ii.b) Soit on applique la méthode qui se base sur une ou plusieurs valeurs de viscosité précédentes, et on applique une correction en conséquence en se basant toujours sur le système d'équation (7).

Plus généralement, une fois la plage de taux de cisaillement $\dot{\gamma}_1, \dot{\gamma}_2, ..., \dot{\gamma}_i, ..., \dot{\gamma}_N$ choisie, plusieurs méthodes sont possibles :

- I) On répète la méthode générale pour chaque taux de cisaillement,
- II) On utilise le ou les points de calcul précédents pour anticiper les débits du prochain point, ce qui permet de faire moins d'itérations, donc d'aller plus vite et de consommer moins de produit.
- II.a) On n'utilise que le dernier point, et on considère que le prochain point va être identique, ce qui est vrai pour un produit newtonien

- II.b) On regarde l'évolution sur plusieurs points et on fait correspondre l'évolution de la viscosité en fonction du taux de cisaillement à une courbe mathématique quelconque, ou plus avantageusement un modèle rhéologique, par exemple une loi de puissance, une loi de Carreau, ou tout autre modèle que l'on peut trouver dans la littérature.

En regard de la figure 4, dans le mode de réalisation du procédé pour lequel deux interfaces sont formées entre deux filets de fluide de référence et le filet de fluide à étudier, la largeur totale Wr des deux filets de fluide de référence et la largeur W du filet de fluide à étudier étant égales à la largeur du canal principal d'écoulement, et les débits des deux filets de fluide de référence étant égaux, l'algorithme de mesure précédemment mentionné et permettant le contrôle de la position d'une seule interface peut être aisément adapté à cette géométrie particulière.

La viscosité peut être déterminée en estimant le gradient de pression dans les deux fluides de référence. La détermination du facteur géométrique permettant d'évaluer la relation entre le gradient de pression et le débit du fluide de référence peut être déterminée de manière plus ou moins précise par des relations connues dans la littérature. En particulier, avec les notations ci-dessus, on peut tout simplement écrire :

$$\nabla P_r = -2 g_r Q_r \eta_r$$

Et suivre le raisonnement précédent pour déterminer la viscosité :

$$\eta_{S,app} = \frac{g_r Q_r}{gQ} \eta_r \simeq \frac{wQ_r}{w_r Q} \eta_r$$

Le reste du raisonnement s'applique de la même manière. En particulier, le taux de cisaillement est évalué dans le filet de fluide à étudier.

De même, l'algorithme de mesure décrit ci-dessus peut être appliqué de la même manière, à la différence près que l'on doit comprendre la largeur du filet de fluide de référence comme étant maintenant la somme des largeurs des deux filets de fluide de référence.

Il est à prendre en considération que le procédé peut être étendu à une configuration pour laquelle au moins deux fluides de référence, pouvant être de natures différentes, s'écoulant à des débits différents, et pouvant en conséquence conduire à des largeurs de filets de fluides différents, entoureraient le fluide à étudier.

Dans ce cas, on pourra de même évaluer le gradient de pression en connaissant les débits respectifs des filets de fluides de référence, les viscosités respectives des fluides de référence, et les largeurs de filets de fluides de référence, par des relations connues de l'homme de l'art.

De même, l'algorithme de mesure décrit ci-dessus pourra être appliqué en considérant la somme des largeurs de filets de fluides de référence, ou toute autre fonction des largeurs de filets de fluides de référence, au lieu de la largeur du filet de fluide de référence décrit dans le procédé avec un unique filet de fluide de référence.

En regard de la figure 5, un autre mode de réalisation concerne un dispositif pour lequel le canal principal d'écoulement 10 présente une largeur ou une hauteur non constante. Une zone d'analyse 2δx peut être sélectionnée pour la mise en oeuvre d'un procédé de mesure pour déterminer la viscosité d'un fluide à étudier en fonction du taux de cisaillement, comme cela est représenté dans la figure 5.

Un algorithme similaire à l'algorithme précédemment décrit permettant le contrôle de la position de l'interface peut être mis en application à ce mode de réalisation. L'algorithme de contrôle de la position de l'interface est appliqué dans une seule zone d'analyse. Par contre, les viscosités et les taux de cisaillement seront calculés dans chaque zone d'analyse.

Pour le calcul, les dimensions (largeur et hauteur) des filets de fluide sont prises en tant que valeurs à une position donnée dans la zone d'analyse, par exemple le centre de cette zone comme cela est représenté à la figure 5 ou bien en tant que valeurs moyennes de ces dimensions sur la longueur de la zone d'analyse, ou de manière plus générale en tant que toute autre valeur représentative de ces dimensions dans la zone d'analyse.

Ce procédé présente l'avantage de permettre de mesurer la viscosité pour plusieurs taux de cisaillement sans changement des débits, ce qui induit un gain de temps et d'échantillon. Par contre la mesure sera moins précise et reproductible car la position de l'interface ne sera en général contrôlée que dans une seule zone d'analyse. De plus, une élongation se superpose au cisaillement, ce qui peut créer un biais dans la mesure pour certains produits présentant une forte viscosité élongationelle.

Le procédé peut évidemment être appliqué à l'écoulement conjoint de plus de deux fluides, comme présenté dans le mode de réalisation précédent, c'est-à-dire que les modes de réalisation se référant aux figures 4 et 5 peuvent être combinés.

## AVANTAGES

Le dispositif et le procédé qui ont été décrit ci-dessus permettent effectivement dé répondre aux buts énoncés :

- Choisir a priori le taux de cisaillement ou la plage de taux de cisaillement sur laquelle va se faire la mesure de viscosité,
- Contrôler la largeur du filet de fluide à étudier, ce qui permet de gagner en précision et en reproductibilité,
- Optimiser l'ajustement des débits / réduire le nombre d'étapes par un algorithme qui prédit les débits à appliquer en se basant sur le ou les points précédents, ce qui permet de réduire à la fois le temps de mesure et le volume d'échantillon,
- Effectuer une mesure en fonction du taux de cisaillement et/ou de la température sans la présence / sans intervention de l'utilisateur.

## VARIANTES

La présente invention ne se limite pas à la forme de réalisation préférée décrite ci-dessus et illustrée au dessin ainsi que les variantes évoquées mais elle concerne toutes les formes de réalisation dans le cadre des revendications ci-après.

L'invention ne se limite notamment pas à la détermination par vision d'au moins une interface (qui doit être visible) entre deux liquides. Cette détermination peut se faire par d'autres méthodes : les moyens d'observation peuvent être constitués de barrette de diodes, d'électrodes intégrées dans le canal, etc... L'important est alors de mesurer la largeur des deux filets fluides (soit la position de l'interface et des parois du canal d'écoulement principal). Dans la version la plus simple du calcul, le rapport des deux suffit : la mesure peut-être relative.

Dans une autre variante de réalisation, on introduit un procédé permettant de calculer la viscosité exactement pour un taux de cisaillement choisi : i) On applique la méthode décrite ci-dessus pour mesurer sur une plage de cisaillement. On obtient deux mesures de viscosités à des taux de cisaillement très proches du taux de cisaillement recherché, et on extrapole linéairement pour trouver la valeur au taux de cisaillement exact (on s'autorise à le faire, même si l'on ne connaît pas le modèle rhéologique du fluide à étudier, car les points sont très proches). Pour plus de précision, on détermine plusieurs paliers de taux de cisaillement et on effectue plusieurs mesures par palier de taux de cisaillement.

## Revendications

1. Procédé de mesure pour déterminer la viscosité d'un fluide à étudier pour un taux de cisaillement qui lui est appliqué, ledit procédé mettant en oeuvre un dispositif comprenant :

   - un canal principal d'écoulement (10), ce canal principal d'écoulement (10) étant prolongé en amont à une de ses extrémités par au moins deux entrées d'alimentation (11,12), reliées à des moyens d'injection (13,14) respectivement d'un fluide de référence et d'un fluide à étudier, la viscosité ($\eta_r$) du fluide de référence étant connue, et
   - des moyens d'observation (15) d'une partie d'une interface créée entre un filet de fluide à étudier et un filet de fluide de référence, lors de leur écoulement dans une zone d'observation, chaque filet de fluide présentant une largeur de filet de fluide, la somme ($W_{tot}$) de la largeur ($_{Wr}$) du filet de fluide de référence et de la largeur ($W$) de filet de fluide à étudier étant égale à la largeur du canal principal d'écoulement (10), cette largeur étant définie perpendiculairement à l'écoulement, le canal principal d'écoulement (10) étant de hauteur ($h$), le procédé comportant des étapes suivantes :
   - calcul des débits initiaux respectifs du filet de fluide de référence ($Q_r$) et du filet de fluide à étudier ($Q$) pour un taux de cisaillement ($\dot{\gamma}$) donné, une viscosité ($\eta$) pour le fluide à étudier et une largeur ($W$) du filet de fluide à étudier étant préalablement choisies pour ce calcul ;
   les calculs étant effectués par application des formules (7) suivantes :

$$Q = \dot{\gamma}\, w\, h^2/6 \, ,$$

   et ;

$$\frac{w}{w_r} = \frac{\eta}{\eta_r}\frac{Q}{Q_r} \; ;$$

dans lesquelles ($\eta_r$) représente la viscosité du fluide de référence ;

- mise en route des moyens d'injection (13, 14) du filet de fluide de référence et du filet de fluide à étudier avec les débits initiaux respectifs,
- après stabilisation de l'écoulement, évaluation de la possibilité de détecter la présence d'au moins une interface entre le filet de fluide à étudier et le filet de fluide de référence dans une zone d'observation du canal principal d'écoulement (10), et détermination de largeur du filet de fluide à étudier et du filet de fluide de référence,
- modification itérative du débit du filet de fluide de référence en tant que débit corrigé jusqu'à ce que l'interface soit détectable et que la largeur mesurée du filet de fluide à étudier soit égale à la largeur totale du filet de fluide à étudier préalablement choisie à l'étape de calcul des débits initiaux, en tenant compte d'une tolérance également préalablement choisie,
- détermination de la viscosité du fluide à étudier pour le taux de cisaillement en fonction au moins du débit initial du filet de fluide à étudier et du débit corrigé dudit au moins un fluide de référence, de la viscosité du fluide de référence et des largeurs respectives du filet de fluide à étudier et du filet de fluide de référence.

2. Procédé selon la revendication 1, dans lequel, dans l'étape de calcul des débits initiaux, la viscosité choisie pour le fluide à étudier est donnée par une estimation de l'utilisateur.

3. Procédé selon la revendication 1, dans lequel, dans l'étape de calcul des débits initiaux, les viscosités respectives des fluides sont considérées égales.

4. Procédé selon l'un quelconque des revendications 1 à 3, dans lequel, dans l'étape de calcul des débits initiaux, la largeur du filet de fluide à étudier et la largeur du filet de fluide de référence sont considérées égales.

5. Procédé selon l'un quelconque des revendications 1 à 4, dans lequel, dans l'étape de détermination de la viscosité, la viscosité du fluide à étudier est déterminée en tenant aussi compte de la largeur totale du canal d'écoulement et d'une des largeurs des filets de fluides.

6. Procédé selon l'une quelconque des revendications 1 à 5, dans lequel il est effectué un réajustement du taux de cisaillement en un taux de cisaillement corrigé en fonction du débit corrigé de fluide à étudier, de la profondeur du canal d'écoulement et de la largeur du filet de fluide à étudier.

7. Procédé selon l'une quelconque des revendications 1 à 6, dans lequel la tolérance préalablement choisie est entre 5 et 25%.

8. Procédé selon l'une quelconque des revendications 1 à 7, dans lequel on fixe une plage de taux de cisaillement sur laquelle on souhaite mesurer la viscosité, ainsi qu'un nombre N de points de mesure sur cette plage correspondant chacun à un taux de cisaillement.

9. Procédé selon la revendication 8, dans lequel les étapes de calcul des débits initiaux, de mise en route des moyens d'injection (13,14), d'évaluation de la présence de la détection d'au moins une interface, de modification itérative du débit et de détermination de la viscosité sont répétées pour chaque taux de cisaillement.

10. Procédé selon la revendication 8, dans lequel la viscosité du fluide à étudier initialement choisie est estimée par au moins une des mesures déjà effectuées.

11. Procédé selon la revendication 10, dans lequel l'estimation est effectuée en faisant l'hypothèse que le liquide est newtonien,

12. Procédé selon la revendication 10, dans lequel l'estimation est effectuée en ajustant un modèle rhéologique comme une loi de puissance, une loi de Carreau ou tout autre modèle en fonction des taux de cisaillement de la plage pour lesquels des mesures ont été effectuées.

**13.** Procédé selon l'une quelconque des revendications 8 à 12, dans lequel, pour plus de précision, on effectue plusieurs mesures pour un taux de cisaillement donné.

**14.** Procédé selon l'une quelconque des revendications précédentes dans lequel le positionnement à la largeur de filet de fluide à étudier préalablement choisie est réalisé après plusieurs itérations, en fonction de la tolérance acceptée.

**15.** Procédé selon l'une quelconque des revendications précédentes, dans lequel, dans l'étape de modification itérative (400) du débit, on fait l'hypothèse que la viscosité varie peu sous l'effet du changement de cisaillement.

**16.** Procédé selon l'une quelconque des revendications précédentes, dans lequel deux interfaces sont formées entre deux filets de fluide de référence et le filet de fluide à étudier, avec, dans cette configuration, la somme des deux largeurs de fluide de référence égale à la largeur d'un filet de fluide de référence unique et la somme des deux débits de fluide de référence égale au débit d'un filet de fluide de référence unique.

**17.** Procédé selon l'une quelconque des revendications précédentes, dans lequel le canal principal d'écoulement (10) présente une largeur ou une hauteur non constante, une zone d'analyse étant sélectionnée pour la mise en oeuvre du procédé.

**18.** Dispositif pour mesurer la viscosité d'un fluide, ledit dispositif comprenant :

- un canal principal d'écoulement (10), ce canal principal d'écoulement (10) étant prolongé en amont d'une de ses extrémités par au moins deux canaux d'alimentation (11,12), un canal d'alimentation pour un fluide à étudier et au moins un canal d'alimentation pour un fluide de référence, chacun desdits au moins deux canaux d'alimentation étant relié à des moyens d'injection (13,14) du fluide respectif,
- des moyens d'observation (15) d'une partie d'au moins une interface entre le fluide à étudier et au moins un fluide de référence lors de leur écoulement, et
- des moyens de mise en oeuvre d'un procédé de mesure pour déterminer la viscosité d'un fluide à étudier pour un taux de cisaillement selon l'une quelconque des revendications 1 à 17.

**19.** Dispositif selon la revendication précédente, lequel comprend deux canaux d'alimentation de fluide de référence débouchant dans le canal principal d'écoulement (10) en intercalant entre eux le canal d'alimentation de fluide à étudier, une interface étant formée entre chaque filet de fluide de référence et le filet de fluide à étudier.

**20.** Dispositif selon l'une quelconque des deux revendications précédentes, dans lequel le canal principal d'écoulement (10) présente des variations, une largeur ou une hauteur du canal principal d'écoulement (10) variant dans la longueur du canal principal d'écoulement (10).

**Patentansprüche**

**1.** Messverfahren zum Bestimmen der Viskosität eines zu untersuchenden Fluids bei einer darauf angewendeten Scherrate, wobei das Verfahren eine Vorrichtung einsetzt, umfassend:

- einen Hauptströmungskanal (10), wobei dieser Hauptströmungskanal (10) stromaufwärts an einem seiner Enden durch mindestens zwei Zufuhreinlässe (11, 12) verlängert ist, die mit Einspritzeinrichtungen (13, 14) eines Referenzfluids bzw. eines zu untersuchenden Fluids verbunden sind, wobei die Viskosität ($\eta_r$) des Referenzfluids bekannt ist, und
- Beobachtungseinrichtungen (15) eines Teils einer Grenzfläche, die zwischen einem zu untersuchenden Fluidstrom und einem Referenzfluidstrom erzeugt wird, während sie durch einen Beobachtungsbereich strömen, wobei jeder Fluidstrom eine Fluidstrombreite aufweist, wobei die Summe ($W_{tot}$) der Breite ($W_r$) des Referenzfluidstroms und der Breite ($W$) des zu untersuchenden Fluidstroms gleich wie die Breite des Hauptströmungskanals (10) ist, wobei diese Breite senkrecht zu der Strömung definiert ist, wobei der Hauptströmungskanal (10) von einer Höhe ($h$) ist,

das Verfahren umfassend die folgenden Schritte:

- Berechnen der jeweiligen anfänglichen Durchflussmengen des Referenzfluidstroms ($Q_r$) und des zu untersuchenden Fluidstroms ($Q$) für eine gegebene Scherrate ($\gamma$), wobei eine Viskosität ($\eta_r$) für das zu untersuchende Fluid und eine Breite ($W$) des zu untersuchenden Fluidstroms für diese Berechnung vorab ausgewählt werden; wobei die Berechnungen durch Anwendung der folgenden Formeln (7) durchgeführt werden:

$$Q = \dot{\gamma}\, w\, h^2/6$$

und

$$\frac{w}{w_r} = \frac{\eta}{\eta_r} \frac{Q}{Q_r} \;;$$

wobei ($\eta_r$) die Viskosität des Referenzfluids darstellt;

- Inbetriebnehmen der Einspritzeinrichtungen (13, 14) des Referenzfluidstroms und des zu untersuchenden Fluidstroms mit den jeweiligen anfänglichen Durchflussmengen,
- nach Stabilisierung der Strömung, Bewerten der Möglichkeit, das Vorhandensein von mindestens einer Grenzfläche zwischen dem zu untersuchenden Fluidstrom und dem Referenzfluidstrom in einem Beobachtungsbereich des Hauptströmungskanals (10) zu erfassen, und Bestimmen der Breite des zu untersuchenden Fluidstroms und des Referenzfluidstroms,
- iteratives Ändern der Durchflussmenge des Referenzfluidstroms als korrigierte Durchflussmenge, bis die Grenzfläche erfassbar ist und die gemessene Breite des zu untersuchenden Fluidstroms gleich ist wie die Gesamtbreite des zu untersuchenden Fluidstroms, die zuvor in dem Schritt eines Berechnens der anfänglichen Durchflussmengen gewählt wurde, unter Berücksichtigung einer ebenfalls zuvor gewählten Toleranz,
- Bestimmen der Viskosität des zu untersuchenden Fluids für die Scherrate zumindest abhängig von der anfänglichen Durchflussmenge des zu untersuchenden Fluidstroms und der korrigierten Durchflussmenge des zumindest einen Referenzfluids, der Viskosität des Referenzfluids und der jeweiligen Breiten des zu untersuchenden Fluidstroms und des Referenzfluidstroms.

2. Verfahren nach Anspruch 1, wobei in dem Schritt eines Berechnens der anfänglichen Durchflussmengen die gewählte Viskosität für das zu untersuchende Fluid durch eine Schätzung des Benutzers gegeben ist.

3. Verfahren nach Anspruch 1, wobei in dem Schritt eines Berechnens der anfänglichen Durchflussmengen die jeweiligen Viskositäten der Fluide als gleich betrachtet werden.

4. Verfahren nach einem der Ansprüche 1 bis 3, wobei in dem Schritt eines Berechnens der anfänglichen Durchflussmengen die Breite des zu untersuchenden Fluidstroms und die Breite des Referenzfluidstroms als gleich betrachtet werden.

5. Verfahren nach einem der Ansprüche 1 bis 4, wobei in dem Schritt eines Bestimmens der Viskosität die Viskosität des zu untersuchenden Fluids auch unter Berücksichtigung der Gesamtbreite des Strömungskanals und einer der Breiten der Fluidströme bestimmt wird.

6. Verfahren nach einem der Ansprüche 1 bis 5, wobei
abhängig von der korrigierten Durchflussmenge des zu untersuchenden Fluids, der Tiefe des Strömungskanals und der Breite des zu untersuchenden Fluidstroms eine Nachjustierung der Scherrate in eine korrigierte Scherrate durchgeführt wird.

7. Verfahren nach einem der Ansprüche 1 bis 6, wobei die zuvor gewählte Toleranz zwischen 5 und 25 % ist.

8. Verfahren nach einem der Ansprüche 1 bis 7, wobei

ein Scherratenbereich, in dem die Viskosität gemessen werden soll, sowie eine Anzahl N von Messpunkten in diesem Bereich festgelegt werden
die jeweils einer Scherrate entsprechen.

9. Verfahren nach Anspruch 8, wobei die Schritte eines Berechnens der anfänglichen Durchflussmengen, eines Inbetriebnehmens der Einspritzeinrichtungen (13, 14), eines Bewertens des Vorhandenseins der Erfassung mindestens einer Grenzfläche, eines iterativen Änderns der Durchflussmenge und eines Bestimmens der Viskosität für jede Scherrate wiederholt werden.

10. Verfahren nach Anspruch 8, wobei die anfänglich gewählte Viskosität des zu untersuchenden Fluids durch mindestens eine der bereits durchgeführten Messungen geschätzt wird.

11. Verfahren nach Anspruch 10, wobei die Schätzung unter der Annahme durchgeführt wird, dass die Flüssigkeit Newton'sch ist.

12. Verfahren nach Anspruch 10, wobei die Schätzung durch Anpassen eines rheologischen Modells, wie beispielsweise eines Potenzgesetzes, eines Carreau'schen Gesetzes oder eines anderen Modells abhängig von den Scherraten des Bereichs, für den Messungen durchgeführt wurden, erfolgt.

13. Verfahren nach einem der Ansprüche 8 bis 12, wobei für eine höhere Genauigkeit mehrere Messungen für eine bestimmte Scherrate durchgeführt werden.

14. Verfahren nach einem der vorherigen Ansprüche, wobei die Positionierung auf die zuvor gewählte Breite des Fluidstroms des zu untersuchenden Fluids nach mehreren Iterationen abhängig von der akzeptierten Toleranz durchgeführt wird.

15. Verfahren nach einem der vorherigen Ansprüche, wobei in dem Schritt einer iterativen Änderung (400) der Durchflussmenge angenommen wird, dass sich die Viskosität durch die Scheränderung nur wenig ändert.

16. Verfahren nach einem der vorherigen Ansprüche, wobei zwei Grenzflächen zwischen zwei Referenzfluidströmen und dem zu untersuchenden Fluidstrom gebildet werden, wobei in dieser Konfiguration die Summe der zwei Referenzfluidbreiten gleich wie die Breite eines einzelnen Referenzfluidstroms und die Summe der zwei Referenzfluid-Durchflussmengen gleich wie der Durchfluss eines einzelnen Referenzfluidstroms ist.

17. Verfahren nach einem der vorherigen Ansprüche, wobei der Hauptströmungskanal (10) eine nicht konstante Breite oder Höhe aufweist, wobei ein Analysebereich für die Durchführung des Verfahrens ausgewählt wird.

18. Vorrichtung zum Messen der Viskosität eines Fluids, die Vorrichtung umfassend:

- einen Hauptströmungskanal (10), wobei dieser Hauptströmungskanal (10) stromaufwärts von einem seiner Enden durch mindestens zwei Zufuhrkanäle (11, 12) verlängert ist, einen Zufuhrkanal für ein zu untersuchendes Fluid und mindestens einen Zufuhrkanal für ein Referenzfluid, wobei jeder der mindestens zwei Zufuhrkanäle mit Einspritzeinrichtungen (13, 14) für das jeweilige Fluid verbunden ist,
- Beobachtungseinrichtungen (15) eines Teils mindestens einer Grenzfläche zwischen dem zu untersuchenden Fluid und mindestens einem Referenzfluid während ihrer Strömung, und
- Einrichtungen zum Durchführen eines Messverfahrens zum Bestimmen der Viskosität eines zu untersuchenden Fluids bei einer Scherrate nach einem der Ansprüche 1 bis 17.

19. Vorrichtung nach dem vorherigen Anspruch, die zwei Referenzfluid-Zufuhrkanäle umfasst, die in den Hauptströmungskanal (10) münden, wobei dazwischen der Zufuhrkanal des zu untersuchenden Fluids eingefügt ist, wobei zwischen jedem Referenzfluidstrom und dem Strom für das zu untersuchende Fluid eine Grenzfläche gebildet wird.

20. Vorrichtung nach einem der zwei vorherigen Ansprüche, wobei der Hauptströmungskanal (10) Variationen aufweist, wobei eine Breite oder eine Höhe des Hauptströmungskanals (10) über die Länge des Hauptströmungskanals (10) variiert.

**Claims**

1. A measuring method for determining the viscosity of a fluid to be studied for a shear rate applied thereto, said method implementing a device comprising:

- a main flow channel (10), this main flow channel (10) being extended upstream at one of its ends by at least two supply inlets (11, 12), connected to injection means (13, 14) for injecting a reference fluid and a fluid to be studied, respectively, the viscosity ($\eta_r$) of the reference fluid being known, and
- observation means (15) for observing part of an interface created between a stream of fluid to be studied and a reference fluid stream, when they flow in an observation zone, each stream of fluid having a fluid stream width, the sum ($W_{tot}$) of the width ($W_r$) of the reference fluid stream and the width ($W$) of the stream of fluid to be studied being equal to the width of the main flow channel (10), this width being defined perpendicularly to the flow, the main flow channel (10) having height ($h$),

the method including the following steps:

- calculating the initial respective flow rates of the reference fluid stream ($Q_r$) and the stream of fluid to be studied ($Q$) for a given shear rate ($\dot{\gamma}$), a viscosity ($\eta$) for the fluid to be studied and a width ($w$) of the fluid stream to be studied being chosen beforehand for this calculation;
the calculations being done by applying the following formulas (7):

$$Q = \dot{\gamma}\, w\, h^2 / 6 \, ,$$

and

$$\frac{w}{w_r} = \frac{\eta}{\eta_r} \frac{Q}{Q_r} \, ;$$

wherein ($\eta_r$) represents the viscosity of the reference fluid;

- starting the injection means (13, 14) for injecting the reference fluid stream and the fluid stream to be studied with the respective initial flow rates,
- after stabilizing the flow, evaluating the possibility of detecting the presence of at least one interface between the fluid stream to be studied and the reference fluid stream in an observation zone of the main flow channel (10), and determining the width of the fluid stream to be studied and the reference fluid stream,
- iteratively modifying the flow rate of the reference fluid stream as corrected flow rate until the interface is detectable and the measured width of the fluid stream to be studied is equal to the total width of the fluid stream to be studied chosen beforehand in the step for calculating the initial flow rates, taking into account a tolerance also chosen beforehand,
- determining the viscosity of the fluid to be studied for the shear rate as a function at least of the initial flow rate of the fluid stream to be studied and the corrected flow rate of said at least one reference fluid, the viscosity of the reference fluid and the respective widths of the fluid stream to be studied and the reference fluid stream.

2. The method according to claim 1, wherein, in the step for calculating the initial flow rates, the viscosity chosen for the fluid to be studied is given by an estimate by the user.

3. The method according to claim 1, wherein, in the step for calculating the initial flow rates, the respective viscosities of the fluids are considered to be equal.

4. The method according to any one of claims 1 to 3, wherein, in the step for calculating the initial flow rates, the width of the fluid stream to be studied and the width of the reference fluid stream are considered to be equal.

5. The method according to any one of claims 1 to 4, wherein, in the step for determining the viscosity, the viscosity of the fluid to be studied is determined by also taking into account the total width of the flow channel and one of the widths of the fluid streams.

6. The method according to any one of claims 1 to 5, wherein the shear rate is readjusted into a corrected shear rate as a function of the corrected flow rate of the fluid to be studied, the depth of the flow channel and the width of the fluid stream to be studied.

7. The method according to any one of claims 1 to 6, wherein the previously chosen tolerance is between 5% and 25%.

8. The method according to any one of claims 1 to 7, wherein a range of shear rates is set over which it is desired to measure the viscosity, as well as a number N of measurement points over this range each corresponding to a shear rate.

9. The method according to claim 8, wherein the steps of calculating the initial flow rates, starting the injection means (13, 14), evaluating the presence of the detection of at least one interface, iteratively modifying the flow rate and determining the viscosity are repeated for each shear rate.

10. The method according to claim 8, wherein the viscosity of the fluid to be studied initially chosen is estimated by at least one of the measurements already carried out.

11. The method according to claim 10, wherein the estimate is carried out by hypothesizing that the liquid is Newtonian.

12. The method according to claim 10, wherein the estimate is carried out by adjusting a rheological model such as a power law, a Carreau law or any other model as a function of the shear rates of the range for which the measurements have been carried out.

13. The method according to any one of claims 8 to 12, wherein, for greater precision, several measurements are carried out for a given shear rate.

14. The method according to any one of the preceding claims, wherein the positioning at the previously chosen width of the fluid stream to be studied is done after several iterations, as a function of the accepted tolerance.

15. The method according to any one of the preceding claims, wherein, in the step for iteratively modifying (400) the flow rate, it is hypothesized that the viscosity varies little under the effect of the shear change.

16. The method according to any one of the preceding claims, wherein two interfaces are formed between two reference fluid streams and the fluid stream to be studied, with, in this configuration, the sum of the two widths of reference fluid equal to the width of one single reference fluid stream and the sum of the two reference fluid streams equal to the flow rate of a single reference fluid stream.

17. The method according to any one of the preceding claims, wherein the main flow channel (10) has a nonconstant width or height, an analysis zone being selected for the implementation of the method.

18. A device for measuring the viscosity of a fluid, said device comprising:

- a main flow channel (10), this main flow channel (10) being extended upstream of one of its ends by at least two supply channels (11, 12), a supply channel for supplying a fluid to be studied and at least one supply channel for a reference fluid, each of said at least two supply channels being connected to injection means (13, 14) for injecting the respective fluid,
- observation means (15) for observing part of at least one interface between the fluid to be studied and at least one reference fluid during the flow thereof, and
- means for implementing a measuring method for determining the viscosity of a fluid to be studied for a shear rate according to any one of claims 1 to 17.

19. The device according to the preceding claim, which comprises two reference fluid supply channels opening into the main flow channel (10) while inserting therebetween the supply channel for fluid to be studied, an interface being formed between each reference fluid stream and the fluid stream to be studied.

20. The device according to any one of the two preceding claims, wherein the main flow channel (10) has variations, a width or a height of the main flow channel (10) varying in the length of the main flow channel (10).

**FIG. 1**

**FIG. 2**

$$\begin{cases} i = 1 \\ \phi = 1 \end{cases}$$ 100

$$Q_i = \frac{W_{tot}\, h^2}{12}\, \dot{\gamma}_i$$

$$Q_{r,i} = \phi\, Q_i$$ 200

300

**I VIS ?** — NON → 410

OUI

**I CEN ?** — NON → 420

OUI

Calcul
$(\dot{\gamma}_{app}, \eta_{app})$ 430

$$\begin{cases} i = i+1 \\ \phi = \eta_{app} / \eta_0 \end{cases}$$ 500

## FIG. 3

fr fet 10

$w_r/2$

w

$W_{tot}$

$w_r/2$

**FIG. 4**

fr fet 10

$2\delta x$

$w(x)$

$w_r(x)$

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2879290, Rhodia

**Littérature non-brevet citée dans la description**

- **DEEPAK E. SOLOMON et al.** Multiplexed microfluidic viscometer for high-throughput complex fluid rheology. *MICROFLUIDICS AND NANOFLUIDICS,* 01 Avril 2014, vol. 16 (4), ISSN 1613-4982, 677-690
- **P. GUILLOT ; A. COLIN.** Détermination of the flow curve of complex fluids using the Rabinowitsch-Mooney équation in sensorless microrheometer. *Microfluid. Nanofluid.,* 2014, vol. 17, 605-611
- **D.E. SOLOMON ; S.A. VANAPALLI.** Multiplexed microfluidic viscometer for high-throughput complex fluid rheology. *Microfluid. Nanofluid.,* 2014, vol. 16, 677-690
- **C.W. MACOSKO.** Rheology : principles, measurements and applications. Wiley, 1994
- **M.E. STEINKE et al.** Single-Phase liquid friction factors in microchannels. *Int. J. of Therm. Sci.,* 2006, vol. 45, 1073-1083
- **H. BRUUS.** Theoretical Microfluidics. Oxford University Press, 2007